# EUROPEAN PATENT SPECIFICATION

(11) **EP 4 287 220 B1**
(45) Date of publication and mention of the grant of the patent: **25.02.2026**
(21) Application number: 23176222.0
(22) Date of filing: 30.05.2023
(51) Int. Cl.: H01F 1/057, H01F 41/02

(54) **METHOD OF PREPARING A NDFEB MAGNET AND A NDFEB MAGNET OBTAINED THEREBY**
VERFAHREN ZUR HERSTELLUNG EINES NDFEB-MAGNETEN UND DAMIT HERGESTELLTER NDFEB-MAGNET
PROCÉDÉ DE PRÉPARATION D'UN AIMANT NDFEB ET AIMANT NDFEB AINSI OBTENU

(30) Priority: 31.05.2022 CN 202210610371
(43) Date of publication of application: 06.12.2023
(73) Proprietor: Yantai Dongxing Magnetic Materials Inc., Yantai City 265500 (CN)
(72) Inventor: Chuanshen, Wang, Yantai City, 265500 (CN); Zhongjie, Peng, Yantai City, 265500 (CN); Kunkun, Yang, Yantai City, 265500 (CN); Zhanji, Dong, Yantai City, 265500 (CN); Kaihong, Ding, Yantai City, 265500 (CN)
(74) Representative: Gulde & Partner

(56) References cited:
- CN-A- 112 802 677
- CN-B- 106 298 219
- JP-A- 2013 225 533

## Description

### BACKGROUND OF THE INVENTION

### 1. Field of the Invention

The invention relates to a method of preparing a NdFeB magnet and a NdFeB magnet obtained by or obtainable by the preparation method.

### 2. Description of the Prior Art

NdFeB sintered permanent magnets are widely used in high-tech fields such as electronic equipment, medical equipment, electric vehicles, household products, robots, etc. In the past few decades of development, NdFeB permanent magnets have been rapidly developed, especially diffusion technology can significantly reduce the consumption of heavy rare earths and has a large cost advantage.

When the heavy rare earth elements Dy or Tb are added to the base alloy during the production of sintered NdFeB permanent magnets, they are present in large quantities in the grain and the consumption of the heavy rare earth elements is correspondingly high. In addition, this leads to a reduction in the residual magnetism of the magnet. Therefore, an alternative method is the so-called grain boundary diffusion, in which a diffusion source is diffused into the magnet along the grain boundary to improve the coercivity of the magnet. This technology uses significantly less heavy rare earths while achieving the same coercivity of the magnets. The process has therefore become widely used in practice, if only for cost reasons. However, as the prices of the heavy rare earths Dy and Tb continue to rise due to very high demand, the cost of grain boundary diffusion technology using pure Dy and Tb is still very high. Therefore, continuous improvement of heavy rare earth alloy diffusion technology is particularly important for the mass production of NdFeB magnets.

In CN106298219B the diffusion source is an R^{L}ᵤR^{H}ᵥFe_{100-u-v-w-z}B_{w}M_{z} rare earth alloy. R^{L} represents at least one element of Pr and Nd, R^{H} represents at least one element in Dy, Tb, and Ho, M represents at least one element of Co, Nb, Cu, Al, Ga, Zr, and Ti, and u, v, w, z is in weight percentage 0≤u≤10, 35≤v≤70, 0.5≤w≤5, 0≤z≤5. The alloy is crushed to form alloy powders. The alloy powders are loaded into a rotary diffusion device with an R-T-B magnet for thermal diffusion in a temperature range of 750°C to 950°C for 4h to 72h, followed by an aging treatment. However, when the B content in the diffusion source is too high, its melting point will be relatively high and it is not easy to diffuse the alloy into the magnet. When the iron content is high in the magnet, too many ferromagnetic phases are formed, and the performance of the NdFeB magnet is reduced including the Hcj and Br of the magnet.

CN113764147A discloses the following: A low melting point alloy (Dy,Tb)AlCu, which contains element of heavy rare earth and a (Pr,Ce)GaCu alloy which has high abundance are weighed separately and are arc melted. The obtained alloy sheets are crushed to powders, which are mixed in proportion to make a paste. The paste is uniformly applied to the surface of the NdFeB magnet, followed by primary and secondary tempering under inert gas protection and in a low magnetic field. The purpose of using light rare earths is to improve the diffusion depth of heavy rare earths. The light rare earths cannot improve coercivity.

CN113851320A discloses a preparation method of a light rare earth alloy grain boundary diffusion non-heavy rare earth sintered neodymium iron boron magnet comprises the following steps: pasting a light rare earth alloy diffusion source to the surface of the non-heavy rare earth sintered neodymium iron boron magnet, performing grain boundary diffusion treatment, and then performing tempering treatment. The component of the light rare earth alloy diffusion source is Pr_{A}Fe_{100-A} wherein A is more than or equal to 10 wt% and less than or equal to 90 wt%. The components of the heavy rare earth-free sintered neodymium-iron-boron magnet are as shown in the formula: RₓFe_{y}MₐGa_{b}B_{c} (I), wherein R is selected from one or more of La, Ce, Nd and Pr, and M is one or more selected from Cu, Al, Co and Zr, and wherein x is 28-33 wt%, y is 60-70 wt%, a is 0-0.6 wt%, b is 0.1-0.8 wt%, and c is 0.9-0.98 wt%. However, the iron content of the diffusion source is too high and too many ferromagnetic phases are formed after diffusion. Although Hcj of the magnet is improved, the Br decline is large, which deteriorate the overall performance of the magnet. Further examples may be found in CN 106 298 219 B, JP 2013 225533 A and CN 112 802 677 A.

### SUMMARY OF THE INVENTION

The invention is defined by the appended claims. The description that follows is subjected to this limitation. Any disclosure lying outside the scope of said claims is only intended for illustrative as well as comparative purposes.

According to one aspect of the present invention, there is provided a method of preparing a NdFeB magnet as defined in claim 1.

According to another aspect of the present invention, there is provided a NdFeB magnet as defined in claim 8.

### DETAILED DESCRIPTION OF THE INVENTION

Reference will now be made in detail to embodiments. The present disclosure, however, may be embodied in various different forms, within the scope of the appended claims.

### General Concept

The method of preparing a NdFeB magnet comprises the following steps:
(S1) providing a diffusion source alloy of chemical formula R_{α}M_{β}B_{γ}Fe_{100-α-β-γ}, wherein 10≤α≤80, 15≤β≤90, 0.1≤γ≤3, R is at least one of Nd and Pr, and M is at least one of Al, Cu, and Ga;
(S2) providing a sintered NdFeB magnet; and
(S3) applying the diffusion source alloy on the surface of the sintered NdFeB magnet and performing a thermal diffusion process.

Preferably, the diffusion source alloy of step S1 is obtained by preparing an alloy sheet of chemical formula R_{α}M_{β}B_{γ}Fe_{100-α-β-γ}, wherein 10≤α≤80, 15≤β≤90, 0.1≤γ≤3, R is at least one of Nd and Pr, and M is at least one of Al, Cu, and Ga; and crushing the alloy sheet into a powder. The diffusion source alloy sheets may be treated by aging prior to crushing.

The crushing of may be performed by a hydrogen embrittlement process followed by a jet milling process. A hydrogen absorption temperature during the hydrogen embrittlement process may be 50°C to 200°C, and a dehydrogenation temperature during the hydrogen embrittlement process may be 450°C to 550°C.

The diffusion source alloy may have an average D50 particle size of 3µm to 60µm measured by laser diffraction after the crushing. Generally, the average particle diameter D50 of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

In **Table 1,** the compositions of exemplary diffusion source alloys (Examples 1 to 16) are summarized.

In step S2, a sintered NdFeB magnet is provided. A NdFeB magnet (also known as NIB or Neo magnet or NdFeB rare earth magnet) is the most widely used type of rare-earth magnet. It is a permanent magnet made from an alloy of neodymium, iron, and boron to form the Nd2Fe14B tetragonal crystalline structure as a main phase. Besides, the microstructure of NdFeB magnets includes usually a Nd-rich phase. The alloy may include further elements in addition to or partly substituting neodymium and iron. The present invention may specifically refer to a sintered NdFeB magnet being formed of an NdFeB base alloy of chemical formula RₐM_{b}B_{c}Fe_{100-a-b-c}, where 27≤a≤33, 1≤b≤4, 0.8≤c≤1.2, R refers to one or more of Nd, Pr, Ce, and La, and M refers to one or more of Al, Cu, Ga, Ti, Zr, Co, Mg, Zn, Nb, Mo, and Sn, wherein the proportions are given in percentage by weight and the balance of the NdFeB base alloy being Fe. Specific alloy compositions of the NdFeB magnets are summarized in **Table 2** (Base Alloy Samples 1 to 16). The C, O content of Base Alloy Samples 1 to 16 was ≤ 200ppm, the N content was ≤ 50ppm.

The sintered NdFeB magnet may be produced according to a conventional process well-known in the art. Specifically, NdFeB alloy flakes of the desired alloy composition may be produced by a strip casting process (for example, using a vacuum induction furnace), then subjected to a hydrogen embrittlement process (i.e. hydrogen absorption and dehydrogenation), followed by jet milling for preparing NdFeB magnet powders. The strip casting process, the hydrogen embrittlement process, and the jet milling process are well-known technologies.

For example, flakes of the NdFeB base alloy may be mixed with lubricants under hydrogen treatment and grounded by air flow to prepare a powder. The powder is pressed, formed and sintered to obtain a NdFeB magnet composed of the base alloy. Preferably, the airflow grinding powder particle size of the NdFeB base alloy powder may be 2µm to 5µm measured by laser diffraction after the crushing.

The NdFeB base alloy powder is usually pressed to form a green compact (blank) while applying a magnetic field. The green compact is sintered. Further, thermally aging steps may follow to form a sintered NdFeB magnet. A temperature of the sintering process for preparing the NdFeB magnet base alloy may be 980°C to 1060°C at a sintering time of 6h to 15 h. Aging may be performed in two steps, for example, at a first aging temperature of 700°C to 850°C for 2h to 10h and a second aging temperature of 450°C to 600°C for 3h to 10h. In **Table 2,** characteristics of NdFeB magnets prior to the diffusion process are summarized.

In step S3, the diffusion source alloy is applied on the surface of the sintered NdFeB magnet and a thermal diffusion process is performed. Applying the diffusion source alloy may be achieved by any conventional process. For example, a slurry may be formed from powdered diffusion source alloy and a slurry forming component. The slurry may be coated on the sintered NdFeB magnet using a spray-coating process, a dip coating process, and screen-printing process. In alternative, the diffusion source alloy may be directly applied by magnetron sputtering coating, evaporation coating, and silk screening coating.

In the diffusion process, the coated NdFeB magnet is heated to a diffusion temperature. Preferably, a diffusion temperature in step S3 is 850°C to 950°C and a diffusion time is 6h to 30h. Subsequently, aging may be performed. For example, a first aging temperature may be 700°C to 850°C for 2h to 10h and a second aging temperature may be 450°C to 600°C for 3h to 10h.

In **Table 1,** process conditions of the diffusion process and aging as well as characteristics of the NdFeB magnets after diffusion are summarized. The diffusion source alloy of Example 1 was coated onto the Base Alloy Sample No. 1, the diffusion source alloy of Example 2 was coated onto the Base Alloy Sample No. 2, etc.

An NdFeB magnet is obtained by or obtainable by the above-mentioned method. The NdFeB magnet may comprise a main phase, a grain boundary phase and rare earth-rich phase, wherein the grain boundary phase comprises a µ-phase an a δ-phase, wherein the µ-phase is R_{36.5}Fe_{63.5-x}Mₓ with 1≤x≤4 and the δ-phase is R_{32.5}Fe_{67.5-y}M_{y} with 2≤y≤20, where R refers to at least two elements selected from Nd, Pr, Ce, and La, and M refers to at least two elements selected from Al, Cu, and Ga, wherein the proportions are given in atomic percentages. In each of Examples 1 to 16, a µ-phase and a δ-phase could be identified in the grain boundary phase.

In **Table 3,** diffusion source materials, process conditions and characteristics of Comparative Examples 1 to 16 are summarized. In Comparative Example 1 the mentioned diffusion source alloy was coated onto the Base Alloy Sample No. 1, in Comparative Example 2 the mentioned diffusion source alloy was coated onto the Base Alloy Sample No. 2, etc. The diffusion source alloys of Comparative Examples 1 to 16 do not include B and Fe.

The residual magnetic reduction of the Examples was significantly lower than the Comparative Examples. Further, the coercivity of the Examples was higher than that of the Comparative Examples. The samples were analysed as follows:
Example 1 and Comparative Example 1: Example 1 shows Br = 1.400 T, Hcj = 1711.4 kA/m, and contains a µ-phase and δ-phase and Comparative Example 1 shows Br=1.360 T, Hcj=1592 kA/m, and contains only a δ-phase. Br (residual magnetism) and Hcj (coercivity) of the Example is significantly improved compared to the Comparative Example.
Example 2 and Comparative Example 2: Example 2 shows Br=1.400 T, Hcj = 1830.8 kA/m, and contains a µ-phase and δ-phase and Comparative Example 2 shows Br=1.350 T, Hcj = 1671.6 kA/m, and contains only δ-phase. Br and Hcj of the Example is significantly improved compared to the Comparative Example.
Example 3 and Comparative Example 3: Example 3 shows Br=1.320 T, Hcj = 1950.2 kA/m, and contains a µ-phase and δ-phase and Comparative Example 3 shows Br = 1.2 90 T, Hcj = 1791.00 kA/m, and contains only δ-phase. Br and Hcj of the Example is significantly improved compared to the Comparative Example.
Example 4 and Comparative Example 4: Example 4 shows Br = 1.330 T, Hcj = 1990 kA/m, and contains a µ-phase and δ-phase and Comparative Example 4 shows Br= 1.280 T, Hcj = 1751.2 kA/m, and contains only δ-phase. Br and Hcj of the Example is significantly improved compared to the Comparative Example.
Example 5 and Comparative Example 5: Example 5 shows Br=1.325 T, Hcj = 1910.4 kA/m, and contains a µ-phase and δ-phase and Comparative Example 5 shows Br = 1.270 T and Hcj = 1751.2 kA/m. Br and Hcj of the Example is significantly improved compared to the Comparative Example.
Example 6 and Comparative Example 6: Example 6 shows Br = 1.335 T, Hcj = 1990 kA/m, and contains a µ-phase and δ-phase and Comparative Example 6 shows Br= 1.30 T and Hcj = 1671.6 kA/m. Br and Hcj of the Example is significantly improved compared to the Comparative Example.
Example 7 and Comparative Example 7: Example 7 shows Br=1.347 T, Hcj = 1950.2 kA/m, and contains a µ-phase and δ-phase and Comparative Example 7 shows Br = 1.31 T, Hcj = 1711.4 kA/m, and contains only δ-phase. Br and Hcj of the Example is significantly improved compared to the Comparative Example.
Example 8 and Comparative Example 8: Example 8 shows Br = 1.35 T, Hcj = 1910.4 kA/m, and contains a µ-phase and δ-phase and Comparative Example 8 shows Br= 1.3 T, Hcj = 1631.8 kA/m, and contains only δ-phase. Br and Hcj of the Example is significantly improved compared to the Comparative Example.
Example 9 and Comparative Example 9: Example 9 shows Br = 1.29 T, Hcj =2029.8 kA/m, and contains a µ-phase and δ-phase and Comparative Example 9 shows Br= 1.25 T, Hcj = 1870.6 kA/m, and contains only δ-phase. Br and Hcj of the Example is significantly improved compared to the Comparative Example.
Example 10 and Comparative Example 10: Example 10 shows Br=1.345 T, Hcj = 2029.8 kA/m, and contains a µ-phase and δ-phase and Comparative Example 10 shows Br = 1.3 T, Hcj = 1870.6 kA/m, and contains only δ-phase. Br and Hcj of the Example is significantly improved compared to the Comparative Example.
Example 11 and Comparative Example 11: Example 11 shows Br=1.38 T, Hcj= 1830.8 kA/m, and contains a µ-phase and δ-phase and Comparative Example 11 shows Br = 1.34 T, Hcj = 1671.6 kA/m, and contains only δ-phase. Br and Hcj of the Example is significantly improved compared to the Comparative Example.
Example 12 and Comparative Example 12: Example 12 shows Br=1.37 T, Hcj= 1910.40 kA/m, and contains a µ-phase and δ-phase and Comparative Example 12 shows Br = 1.32 T and Hcj = 1751.0 kA/m. Br and Hcj of the Example is significantly improved compared to the Comparative Example.
Example 13 and Comparative Example 13: Example 13 shows Br=1.23 T, Hcj = 1990 kA/m, and contains a µ-phase and δ-phase and Comparative Example 13 shows Br = 1.2 T, Hcj = 1830.8 kA/m, and contains only δ-phase. Br and Hcj of the Example is significantly improved compared to the Comparative Example.
Example 14 and Comparative Example 14: Example 14 shows Br=1.25 T, Hcj= 1910.4 kA/m, and contains a µ-phase and δ-phase and Comparative Example 14 shows Br = 1.23 T and Hcj = 1751.2 kA/m. Br and Hcj of the Example is significantly improved compared to the Comparative Example.
Example 15 and Comparative Example 15: Example 15 shows Br=1.335 T, Hcj = 1830.8 kA/m, and contains a µ-phase and δ-phase and Comparative Example 15 shows Br = 1.29 T and Hcj = 1631.8 kA/m. Br and Hcj of the Example is significantly improved compared to the Comparative Example.
Example 16 and Comparative Example 16: Example 16 shows Br = 1.325 T, Hcj= 2029.8 kA/m, and contains a µ-phase and δ-phase and Comparative Example 16 shows Br = 1.28 T, Hcj = 1870.6 kA/m, and contains only δ-phase. Br and Hcj of the Example is significantly improved compared to the Comparative Example.

Rare earth magnet and manufacturing method thereof of the present invention has at least the following technical effects:
(1) The diffusion source alloy R_{α}M_{β}B_{γ}Fe_{100-α-β-γ} has a low content of high melting point B and there are no high melting point heavy rare earth elements. The light rare earth element content is high, the diffusion coefficient is large. Therefore, the diffusion efficiency is high, and it is easy to diffuse the diffusion source alloy into the magnet. This method can transport heavy rare earths into the magnet, forming more core shells and grain boundary structures, effectively increasing the coercivity of the magnet.
(2) The diffusion source alloy R_{α}M_{β}B_{γ}Fe_{100-α-β-γ} contains B element, which can reduce the oxidation problem in the diffusion process, so as to increase the utilization efficiency of the element in the diffusion process.
(3) The diffusion source alloy R_{α}M_{β}B_{γ}Fe_{100-α-β-γ} contains B element and Fe element forming a main phase while diffusing into the magnet and increasing the Br value. The elemental Fe can form a µ- and δ-phase with Al, Ga and Cu elements under the process of diffusion so as to improve the coercivity of the magnet.
(4) The diffusion source alloy R_{α}M_{β}B_{γ}Fe_{100-α-β-γ} contains B element and Fe element, and the total weight ratio of B and Fe can reach up to 20%, which can greatly reduce the price of the diffusion source alloy, thereby reducing production costs.
(5) The diffusion source can be prepared in large quantities, and the coating method can achieve nearly 100% utilization efficiency which can reduce production costs and improve the core competitiveness of NdFeB magnet products in the production process.

Compared with the prior art, the present invention realizes the cooperation between the light rare earth diffusion source and the corresponding component magnet, greatly improves the coercivity of the magnet, and reduces the problem of large Br decline in the process of light rare earth diffusion.

**Table 1 - Diffusion sources, process conditions and characteristics of the NdFeB magnet base alloy after diffusion**

| Example No. | Diffusion source | Size | Diff. Temp. | time | 1^{st} Aging Temp. | time | 2^{nd} Aging Temp. | time | Performance after Diffusion | | | Whether it contains µ-phase | Whether it contains δ-phase |
|---|---|---|---|---|---|---|---|---|---|---|---|---|---|
| | | mm | °C | h | °C | h | °C | h | Br | Hcj | Hk/Hcj | | |
| 1 | Nd:70%, Al:15%, B:3%, Fe: bal. | 10*10*3 | 850 | 15 | 700 | 2 | 450 | 10 | 1.400 | 1711.40 | 0.95 | yes | yes |
| 2 | Pr:65%, Cu:25%, B:2%, Fe: bal. | 10*10*5 | 800 | 25 | 700 | 3 | 480 | 7 | 1.400 | 1830.80 | 0.94 | yes | yes |
| 3 | Nd:60%, Al:15%, Cu:15%, B:3%, Fe: bal. | 10*10*4 | 850 | 10 | 700 | 5 | 480 | 5 | 1.320 | 1950.20 | 0.94 | yes | yes |
| 4 | Pr:30%, Al:50%, Ga:10%, B:2%, Fe: bal. | 10*10*6 | 900 | 25 | 750 | 8 | 500 | 10 | 1.330 | 1990.00 | 0.95 | yes | yes |
| 5 | Pr:50%, Ga:15%, Cu:30%, B:1%, Fe: bal. | 10*10*4 | 860 | 15 | 750 | 10 | 520 | 3 | 1.325 | 1910.40 | 0.96 | yes | yes |
| 6 | Nd:80%, Cu:15%, B:0.5%, Fe: bal. | 10*10*3 | 850 | 10 | 750 | 2 | 600 | 4 | 1.335 | 1990.00 | 0.95 | yes | yes |
| 7 | Pr:80%, Ga:15%, B:0.1%, Fe: bal. | 10*10*4 | 880 | 10 | 750 | 3 | 540 | 3 | 1.347 | 1950.20 | 0.94 | yes | yes |
| 8 | Pr:70%, Ga:10%, Cu:15%, B:0.8%, Fe: bal. | 10*10*3 | 900 | 10 | 750 | 5 | 500 | 8 | 1.350 | 1910.40 | 0.95 | yes | yes |
| 9 | Pr:50%, Cu:40%, B:2%, Fe: bal. | 10*10*5 | 900 | 15 | 800 | 8 | 490 | 6 | 1.290 | 2029.80 | 0.94 | yes | yes |
| 10 | Pr:60%, Al:20%, Cu:15%, B:0.5%, Fe: bal. | 10*10*5 | 910 | 15 | 800 | 10 | 450 | 5 | 1.345 | 2029.80 | 0.95 | yes | yes |
| 11 | Pr:65%, Al:15%, Cu:15%, B:1%, Fe: bal. | 10*10*7 | 900 | 30 | 800 | 2 | 500 | 10 | 1.380 | 1830.80 | 0.95 | yes | yes |
| 12 | Nd:30%, Pr:40%, Cu:20%, B:1%, Fe: bal. | 10*10*8 | 910 | 30 | 800 | 3 | 480 | 8 | 1.370 | 1910.40 | 0.95 | yes | yes |
| 13 | Nd:50%, Cu:20%, Al:20%, B:2%, Fe: bal. | 10*10*4 | 900 | 15 | 850 | 5 | 450 | 8 | 1.230 | 1990.00 | 0.95 | yes | yes |
| 14 | Nd:45%, Cu:30%, Al:10%, B:1%, Fe: bal. | 10*10*5 | 900 | 7 | 850 | 8 | 500 | 6 | 1.250 | 1910.40 | 0.94 | yes | yes |
| 15 | Nd:60%, Cu:15%, Ga:15%, B:4%, Fe: bal. | 10*10*4 | 900 | 8 | 850 | 10 | 530 | 4 | 1.335 | 1830.80 | 0.95 | yes | yes |
| 16 | Pr:70%, Cu:10%, Al:15%, B:0.5%, Fe: bal. | 10*10*6 | 910 | 20 | 850 | 3 | 470 | 10 | 1.325 | 2029.80 | 0.94 | yes | yes |

**Table 2 -NdFeB base alloy compositions and its performance**

| | Composition of NdFeB base alloy (wt.%) | | | | | | | | | | Performance | | |
|---|---|---|---|---|---|---|---|---|---|---|---|---|---|
| | R | | M | | | | | | | | | | |
| Base Alloy Sample No. | Pr | Nd | Cu | Al | Ga | Co | Ti | Zr | Fe | B | Br (T) | Hcj (kA/m) | Hk/Hcj |
| 1 | 8.58 | 21.71 | 0.16 | 0.17 | 0.27 | 0.85 | 0.02 | 0.00 | bal. | 0.90 | 1.430 | 1384.24 | 0.99 |
| 2 | 3.99 | 26.55 | 0.13 | 0.14 | 0.32 | 0.46 | 0.02 | 0.07 | bal. | 0.88 | 1.430 | 1424.84 | 0.99 |
| 3 | 4.08 | 26.55 | 0.16 | 0.19 | 0.26 | 0.81 | 0.12 | 0.00 | bal. | 0.89 | 1.358 | 1592.80 | 0.98 |
| 4 | 7.60 | 23.62 | 0.38 | 0.28 | 0.37 | 0.76 | 0.09 | 0.00 | bal. | 0.87 | 1.360 | 1604.74 | 0.99 |
| 5 | 6.09 | 25.44 | 0.14 | 0.34 | 0.52 | 0.93 | 0.18 | 0.00 | bal. | 0.91 | 1.355 | 1576.08 | 0.98 |
| 6 | 6.98 | 24.00 | 0.19 | 0.33 | 0.42 | 0.86 | 0.10 | 0.00 | bal. | 0.90 | 1.366 | 1502.05 | 0.99 |
| 7 | 6.70 | 24.10 | 0.23 | 0.25 | 0.28 | 0.94 | 0.07 | 0.00 | bal. | 0.87 | 1.376 | 1472.60 | 0.98 |
| 8 | 7.45 | 24.03 | 0.23 | 0.34 | 0.29 | 0.91 | 0.08 | 0.00 | bal. | 0.89 | 1.380 | 1488.52 | 0.99 |
| 9 | 4.50 | 26.55 | 0.16 | 0.50 | 0.39 | 0.81 | 0.04 | 0.09 | bal. | 0.89 | 1.320 | 1671.60 | 0.98 |
| 10 | 8.34 | 22.87 | 0.16 | 0.35 | 0.44 | 1.58 | 0.08 | 0.00 | bal. | 0.87 | 1.365 | 1576.08 | 0.99 |
| 11 | 8.84 | 21.47 | 0.21 | 0.20 | 0.30 | 1.45 | 0.04 | 0.00 | bal. | 0.90 | 1.420 | 1393.00 | 0.98 |
| 12 | 6.56 | 23.48 | 0.14 | 0.20 | 0.37 | 0.43 | 0.06 | 0.00 | bal. | 0.90 | 1.398 | 1498.07 | 0.99 |
| 13 | 0.00 | 32.80 | 0.25 | 0.95 | 0.20 | 1.50 | 0.00 | 0.00 | bal. | 1.10 | 1.260 | 1393.00 | 0.99 |
| 14 | 0.00 | 32.80 | 0.15 | 0.95 | 0.20 | 1.50 | 0.00 | 0.00 | bal. | 1.00 | 1.270 | 1353.20 | 0.99 |
| 15 | 6.30 | 25.20 | 0.15 | 0.60 | 0.20 | 0.50 | 0.10 | 0.00 | bal. | 0.91 | 1.360 | 1353.20 | 0.98 |
| 16 | 8.21 | 23.60 | 0.16 | 0.35 | 0.35 | 0.74 | 0.15 | 0.00 | bal. | 0.86 | 1.342 | 1694.68 | 0.99 |

**Table 3 - Diffusion sources, process conditions and characteristics of the NdFeB magnets after diffusion of Comparative Examples 1 to 16**

| Comparative Example No. | Diffusion source | Size | Diffusion Temp. | Holding time | Aging Temp. | Holding time | Performance after Diffusion | | | Whether it contains µ-phase | Whether it contains δ-phase |
|---|---|---|---|---|---|---|---|---|---|---|---|
| | | mm | °C | h | °C | h | Br T | Hcj kA/m | Hk/Hcj | | |
| 1 | Nd:85%, Al:15% | 10*10*3 | 850 | 15 | 450 | 10 | 1.360 | 1592.00 | 0.95 | No | yes |
| 2 | Pr:75%, Cu:25% | 10*10*5 | 800 | 25 | 480 | 7 | 1.350 | 1671.60 | 0.95 | No | yes |
| 3 | Nd:70%, AI:15%, Cu:15% | 10*10*4 | 850 | 10 | 480 | 5 | 1.290 | 1791.00 | 0.94 | No | yes |
| 4 | Pr:40%, Al:50%, Ga:10% | 10*10*6 | 900 | 25 | 500 | 10 | 1.280 | 1751.20 | 0.95 | No | yes |
| 5 | Pr:55%, Ga:15%, Cu:30% | 10*10*4 | 860 | 15 | 520 | 3 | 1.270 | 1751.20 | 0.95 | No | No |
| 6 | Nd:85%, Cu:15% | 10*10*3 | 850 | 10 | 600 | 4 | 1.300 | 1671.60 | 0.96 | No | No |
| 7 | Pr:85%, Ga:15% | 10*10*4 | 880 | 10 | 540 | 3 | 1.310 | 1711.40 | 0.94 | No | yes |
| 8 | Pr:75%, Ga:10%, Cu:15% | 10*10*3 | 900 | 10 | 500 | 8 | 1.300 | 1631.80 | 0.96 | No | yes |
| 9 | Pr:60%, Cu:40% | 10*10*5 | 900 | 15 | 490 | 6 | 1.250 | 1870.60 | 0.94 | No | yes |
| 10 | Pr:65%, Al:20%, Cu:15% | 10*10*5 | 910 | 15 | 450 | 5 | 1.300 | 1870.60 | 0.94 | No | yes |
| 11 | Pr:70%, Al:15%, Cu:15% | 10*10*7 | 900 | 30 | 500 | 10 | 1.340 | 1671.60 | 0.95 | No | yes |
| 12 | Nd:40%, Pr:40%, Cu:20% | 10*10*8 | 910 | 30 | 480 | 8 | 1.320 | 1751.20 | 0.94 | No | No |
| 13 | Nd:60%, Cu:20%, Al:20% | 10*10*4 | 850 | 15 | 450 | 8 | 1.200 | 1830.80 | 0.95 | No | yes |
| 14 | Nd:60%, Cu:30%, Al:10% | 10*10*5 | 900 | 7 | 500 | 6 | 1.230 | 1751.20 | 0.94 | No | No |
| 15 | Nd:70%, Cu:15%, Ga:15% | 10*10*4 | 850 | 8 | 530 | 4 | 1.290 | 1631.80 | 0.95 | No | No |
| 16 | Pr:75%, Cu:10%, Al:15% | 10*10*6 | 910 | 20 | 470 | 10 | 1.280 | 1870.60 | 0.94 | No | yes |

## Claims

1. A method of preparing a NdFeB magnet, the method comprising the following steps:
(S1) providing a diffusion source alloy of chemical formula R_{α}M_{β}B_{γ}Fe_{100-α-β-γ}, wherein 10≤α≤80, 15≤β≤90, 0.1≤γ≤3 with α, β and γ referring to weight percentage, R is at least one of Nd and Pr, and M is at least one of Al, Cu, and Ga;
(S2) providing a sintered NdFeB magnet; and
(S3) applying the diffusion source alloy on the surface of the sintered NdFeB magnet and performing a thermal diffusion process.

2. The method of claim 1, wherein the sintered NdFeB magnet is formed of an NdFeB base alloy of chemical formula RₐM_{b}B_{c}Fe_{100-a-b-c}, where 27≤a≤33, 1≤b≤4, 0.8≤c≤1.2, R refers to one or more of Nd, Pr, Ce, and La, and M refers to one or more of Al, Cu, Ga, Ti, Zr, Co, Mg, Zn, Nb, Mo, and Sn, wherein the proportions are given in percentage by weight and the balance of the NdFeB base alloy being Fe.

3. The method of claim 1 or 2, wherein a diffusion temperature in step (S3) is 800°C to 910°C, a diffusion time is 6h to 30h, a first-stage aging temperature is 700°C to 850°C, a first-level aging time is 2h to 10h, a second-stage aging temperature is 450°C to 600°C, and a second-stage aging time is 3h to 10h.

4. The method of any one of the preceding claims, wherein the diffusion source alloy of step (S1) is obtained by preparing an alloy sheet of chemical formula R_{α}M_{β}B_{γ}Fe_{100-α-β-γ}, wherein 10≤α≤80, 15≤β≤90, 0.1≤γ≤3 with α, β and γ referring to weight percentage, R is at least one of Nd and Pr, and M is at least one of Al, Cu, and Ga; and crushing the alloy sheet into a powder.

5. The method of claim 4, wherein the crushing of is performed by a hydrogen embrittlement process followed by a jet milling process.

6. The method of claim 5, wherein a hydrogen absorption temperature during the hydrogen embrittlement process is 50°C to 200°C, and a dehydrogenation temperature during the hydrogen embrittlement process is 450°C to 550°C.

7. The method of any one of claims 4 to 6, wherein the diffusion source alloy has an average D50 particle size of 3µm to 60µm measured by laser diffraction after the crushing.

8. A NdFeB magnet wherein the NdFeB magnet comprises a main phase, a grain boundary phase and rare earth-rich phase, **characterised in that** the grain boundary phase comprises a µ-phase and a δ-phase, wherein the µ-phase is R_{36.5}Fe_{63.5-x}Mₓ with 1≤x≤4 and the δ-phase is R_{32.5}Fe_{67.5-y}M_{y} with 2≤y≤20, where R refers to at least two elements selected from Nd, Pr, Ce, and La, and M refers to at least two elements selected from Al, Cu, and Ga, wherein the proportions are given in atomic percentages.

## Patentansprüche

1. Verfahren zur Herstellung eines NdFeB-Magneten, wobei das Verfahren die folgenden Schritte umfasst:
(S1) Bereitstellen einer Diffusionsquellenlegierung mit der chemischen Formel R_{α}M_{β}B_{γ}Fe_{100-α-β-γ}, wobei 10≤α≤80, 15≤β≤90, 0,1≤γ≤3, wobei α, β und γ Gewichtsprozente bezeichnen, R mindestens eines von Nd und Pr ist und M mindestens eines von Al, Cu und Ga ist;
(S2) Bereitstellen eines gesinterten NdFeB-Magneten; und
(S3) Aufbringen der Diffusionsquellenlegierung auf die Oberfläche des gesinterten NdFeB-Magneten und Durchführen eines thermischen Diffusionsprozesses.

2. Verfahren nach Anspruch 1, wobei der gesinterte NdFeB-Magnet durch eine NdFeB-Basislegierung mit der chemischen Formel RₐM_{b}B_{c}Fe_{100-a-b-c} gebildet ist, wobei 27≤a≤33, 1 ≤ b ≤ 4, 0,8 ≤ c ≤ 1,2, R eines oder mehrere von Nd, Pr, Ce und La bezeichnet und M eines oder mehrere von Al, Cu, Ga, Ti, Zr, Co, Mg, Zn, Nb, Mo und Sn bezeichnet, wobei die Anteile in Gewichtsprozent angegeben sind und der Rest der NdFeB-Basislegierung Fe ist.

3. Verfahren nach Anspruch 1 oder 2, wobei eine Diffusionstemperatur in Schritt (S3) 800°C bis 910°C beträgt, eine Diffusionszeit 6 h bis 30 h beträgt, eine Alterungstemperatur einer ersten Phase 700°C bis 850°C beträgt, eine Alterungszeit einer ersten Stufe 2 h bis 10 h beträgt, eine Alterungstemperatur einer zweiten Phase 450°C bis 600°C beträgt und eine Alterungszeit der zweiten Phase 3 h bis 10 h beträgt.

4. Verfahren nach einem der vorstehenden Ansprüche, wobei die Diffusionsquellenlegierung von Schritt (S1) durch Herstellen eines Legierungsbleches mit der chemischen Formel R_{α}M_{β}B_{γ}Fe_{100-α-β-γ} erhalten wird, wobei 10≤α≤80, 15 ≤ β ≤ 90, 0,1 ≤ γ ≤ 3, wobei α, β und γ Gewichtsprozente bezeichnen, R mindestens eines von Nd und Pr ist und M mindestens eines von Al, Cu und Ga ist; und Zerkleinern des Legierungsblechs zu einem Pulver.

5. Verfahren nach Anspruch 4, wobei das Zerkleinern durch einen Wasserstoffversprödungsprozess gefolgt von einem Strahlmahlprozess durchgeführt wird.

6. Verfahren nach Anspruch 5, wobei eine Wasserstoffabsorptionstemperatur während des Wasserstoffversprödungsprozesses 50°C bis 200°C und eine Dehydrierungstemperatur während des Wasserstoffversprödungsprozesses 450°C bis 550°C beträgt.

7. Verfahren nach einem der Ansprüche 4 bis 6, wobei die Diffusionsquellenlegierung eine durchschnittliche D50-Partikelgröße von 3 µm bis 60 µm aufweist, gemessen durch Laserbeugung nach dem Zerkleinern.

8. NdFeB-Magnet, wobei der NdFeB-Magnet eine Hauptphase, eine Korngrenzphase und eine seltenerdreiche Phase umfasst, **dadurch gekennzeichnet, dass** die Korngrenzphase eine µ-Phase und eine δ-Phase umfasst, wobei die µ-Phase R_{36,5}Fe_{63,5-x}Mₓ mit 1≤x≤4 und die δ-Phase R_{32,5}Fe_{67,5-y}M_{y} mit 2≤y≤20 ist, wobei R mindestens zwei Elemente bezeichnet, die aus Nd, Pr, Ce und La ausgewählt sind, und M mindestens zwei Elemente bezeichnet, die aus Al, Cu und Ga ausgewählt sind, wobei die Anteile in Atomprozent angegeben sind.

## Revendications

1. Procédé de préparation d'un aimant NdFeB, le procédé comprenant les étapes suivantes:
(S1) fournir un alliage source de diffusion de formule chimique R_{α}M_{β}B_{γ}Fe_{100-α-β-γ}, dans lequel 10≤α≤80,15≤β≤90, 0,1≤γ≤3 avec α, β et γ se référant à un pourcentage de poids, R est au moins un élément entre Nd et Pr, et M est au moins un élément parmi Al, Cu, et Ga ;
(S2) fournir un aimant fritté NdFeB ; et
(S3) appliquer l'alliage source de diffusion sur la surface de l'aimant fritté NdFeB et effectuer un processus de diffusion thermique.

2. Procédé selon la revendication 1, dans lequel l'aimant fritté NdFeB est formé d'un alliage à base de NdFeB de formule chimique RₐMₚBₑFe_{100-a-b-c}, où 27≤a≤33, 1≤b≤4, 0,8≤c≤1,2, R se réfère à un ou plusieurs parmi Nd, Pr, Ce, et La, et M se réfère à un ou plusieurs parmi Al, Cu, Ga, Ti, Zr, Co, Mg, Zn, Nb, Mo, et Sn, dans lequel les proportions s'expriment en pourcentage par poids et l'équilibre de l'alliage à base de NdFeB étant Fe.

3. Procédé selon la revendication 1 ou 2, dans lequel une température de diffusion à l'étape (S3) est de 800°C à 910°C, un temps de diffusion est de 6h à 30h, une température de vieillissement de première stade est de 700°C à 850°C, un temps de vieillissement de premier niveau est de 2h à 10h, une température de vieillissement de seconde stade est de 450°C à 600°C, et un temps de vieillissement de seconde stade est de 3h à 10h.

4. Procédé selon l'une quelconque des revendications précédentes, dans lequel l'alliage source de diffusion à l'étape (S1) est obtenu en préparant une feuille d'alliage de formule chimique R_{α}M_{β}B_{γ}Fe_{100-α-β-γ}, dans lequel 10≤α≤80, 15≤β≤90, 0,1≤γ≤3 avec α, β et γ se référant à un pourcentage de poids, R est au moins un élément entre Nd et Pr, et M est au moins un élément parmi Al, Cu, et Ga ; et en broyant la feuille d'alliage en poudre.

5. Procédé selon la revendication 4, dans lequel le broyage de est effectué par un processus de fragilisation par hydrogène suivi par un processus de broyage à jet.

6. Procédé selon la revendication 5, dans lequel une température d'absorption d'hydrogène pendant le processus de fragilisation par hydrogène est de 50°C à 200°C, et une température de déshydrogénation pendant le processus de fragilisation par hydrogène est de 450°C à 550°C.

7. Procédé selon l'une quelconque des revendications 4 à 6, dans lequel l'alliage source de diffusion a une taille moyenne de particule D50 de 3µm à 60µm mesurée par une diffraction laser après le broyage.

8. Aimant NdFeB dans lequel l'aimant NdFeB comprend une phase principale, une phase de limite de grain et une phase de riche en terres rares, **caractérisé en ce que** la phase de limite de grain comprend une phase µ et une phase δ, dans lequel la phase µ est R_{36,5}Fe_{63,5-x}Mₓ avec 1≤x≤4 et la phase δ est R_{32,5}Fe_{67,5-y}M_{y} avec 2≤y≤20, dans lequel R se réfère à au moins deux éléments sélectionnés parmi Nd, Pr, Ce, and La, et M se réfère à au moins deux éléments parmi Al, Cu, and Ga, dans lequel les proportions s'expriment en pourcentages atomiques.
